(19) Europäisches Patentamt
European Patent Office
Office européen des brevets

(11) **EP 3 022 826 B1**

(12) **EUROPEAN PATENT SPECIFICATION**

(45) Date of publication and mention of the grant of the patent:
**28.03.2018 Bulletin 2018/13**

(21) Application number: **14809267.9**

(22) Date of filing: **18.07.2014**

(51) Int Cl.:
$H02J\ 7/00^{(2006.01)}$          $H02J\ 7/04^{(2006.01)}$

(86) International application number:
**PCT/CN2014/082512**

(87) International publication number:
**WO 2015/007236 (22.01.2015 Gazette 2015/03)**

(54) **METHOD, CHARGER DEVICE, AND ADAPTOR CAPABLE OF MAXIMUM OUTPUT POWER POINT TRACKING**

VERFAHREN, LADEVORRICHTUNG, VORRICHTUNG UND ADAPTER ZUR MPP-VERFOLGUNG

PROCÉDÉ, DISPOSITIF CHARGEUR ET ADAPTATEUR APTES À RECHERCHER LE POINT DE PUISSANCE DE SORTIE MAXIMAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2013 US 201361856014 P**

(43) Date of publication of application:
**25.05.2016 Bulletin 2016/21**

(73) Proprietor: **MediaTek Inc.**
**Hsin-Chu (TW)**

(72) Inventors:
• **HSU, Chih-Yuan**
**Hsinchu City (TW)**

• **LEE, Chuan-Chang**
**Hsinchu County (TW)**

(74) Representative: **Hoefer & Partner Patentanwälte mbB**
**Pilgersheimer Straße 20**
**81543 München (DE)**

(56) References cited:
| | |
|---|---|
| WO-A1-2012/132459 | WO-A2-2011/109746 |
| US-A1- 2009 001 937 | US-A1- 2009 001 937 |
| US-A1- 2010 277 131 | US-A1- 2010 277 131 |
| US-A1- 2011 199 040 | US-A1- 2012 268 063 |
| US-B1- 6 300 744 | US-B2- 8 350 522 |

## Description

### FIELD OF INVENTION

The present invention relates to a charging scheme, and more particularly to a method for controlling an adaptor to charge a battery.

### BACKGROUND OF THE INVENTION

The market is flooded with many different types of adaptors, and these different adaptors may be used for outputting/providing different rated currents. A traditional charging scheme may limit the level of input current provided from an adaptor for safety since different adaptors are designed with different rated output currents. Accordingly, the traditional charging scheme limits the level of current from an adaptor when the adaptor is connected and used for charging a battery. This can avoid that an adaptor may provide an over higher current. However, this also causes that the current from the adaptor is overly limited and the adaptor never outputs a larger current. For example, the traditional charging scheme may limit the level of current to 500mA even though an adaptor may be capable of providing a maximum current of 1800mA. In this situation, the output power of adaptor becomes worse since the output power is almost limited by the traditional charging scheme. Since the output power of an adaptor is limited, it is necessary for the traditional charging system to wait for a longer time period to charge the battery.

Additionally, adaptors designed with identical rated output currents may generate different variations on their output currents, and the traditional charging scheme limiting the output currents of these adaptors to the same level cannot adaptively control different types of adaptors. Thus, the traditional charging scheme is not compatible with different types of adaptors.

US2009/0001937A1 discloses a power management system having a battery controller, wherein the battery controller receives a power recognition signal and generates a control signal to adjust an output power of an adapter according to a status of the battery pack and a status of a system load. US2010/0277131 A1 discloses an electronic device including a power supply circuit for setting a charge current. Further charging devices are disclosed in patent documents US2011/199040A1, WO2012/132459A1, US2012/268063A1,

WO2011/109746A2 and US8350522B2.

### SUMMARY OF THE INVENTION

Therefore one of the objectives of the present invention is to provide a scheme for controlling a controllable adaptor to make the controllable adaptor operate at a working point, so as to solve the above-mentioned problems.

The claimed invention is defined by the appended claims.

### BRIEF DESCRIPTION OF THE DRAWINGS

FIG. 1 is a block diagram of a charging system according to embodiments of the present invention.
FIG. 2A is a flowchart illustrating the operations of charger device of FIG. 1 according to a first embodiment of the present invention.
FIG. 2B is a diagram illustrating an example of output voltage curve of adaptor shown in FIG. 1 according to the flowchart of FIG. 2A.
FIG. 2C is a diagram illustrating an example of current curve of adaptor shown in FIG. 1 according to the flowchart of FIG. 2A and the output voltage curve of FIG. 2B.
FIG. 2D is a diagram illustrating an example of I-V curve of adaptor shown in FIG. 1 according to the embodiment shown in FIGS. 2A-2C.
FIG. 3A is a flowchart illustrating the operations of charger device of FIG. 1 according to a second embodiment of the present invention.
FIG. 3B is a diagram illustrating an example of voltage curve of adaptor shown in FIG. 1 according to the flowchart of FIG. 3A.
FIG. 3C is a diagram illustrating an example of current curve of adaptor shown in FIG. 1 according to the flowchart of FIG. 3A and the voltage curve of FIG. 3B.
FIG. 3D is a diagram illustrating an example of I-V curve of adaptor shown in FIG. 1 according to the embodiment shown in FIGS. 3A-3C.
FIG. 4A and FIG. 4B are diagrams respectively illustrating an example of I-V curve of battery and an example of I-V curve of adaptor.

### DETAILED DESCRIPTION

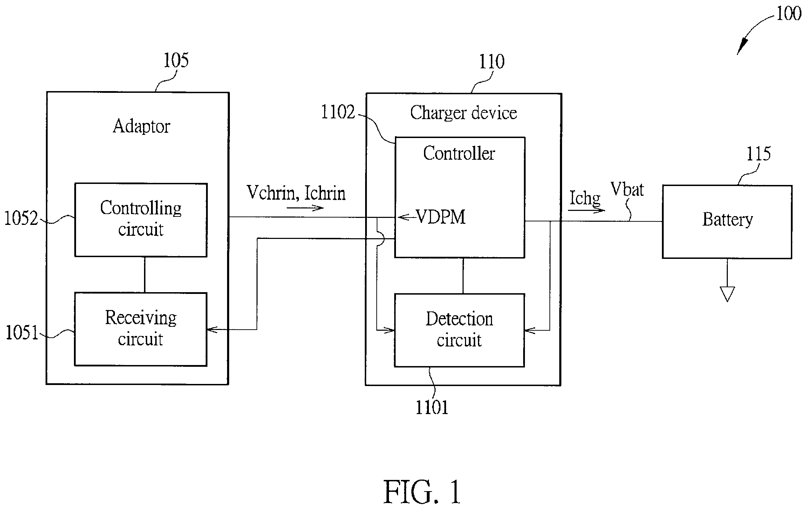

Please refer to FIG. 1, which is a block diagram of a charging system 100 according to embodiments of the present invention. The charging system 100 comprises an adaptor 105 such as a controllable adaptor, a charger device 110, and a battery 115. The charger device 110 may be implemented by using (but not limited) a switching mode charger. The adaptor 105 supplies/provides an output voltage and an output current to the charger device 110, and the output voltage and current received by the charger device 110 can be substantially regarded as an input voltage and input current for the charger device 110 and are indicated by Vchrin and Ichrin on FIG. 1. According to the voltage Vchrin and current Ichrin, the charger device 110 provides a charging current Ichg for charging the battery 115. Power transformation of charger device 110 can be represented by the following equation:

$$Vchrin \times Ichrin \times \eta = Ichg \times Vbat;$$

wherein $\eta$ indicates the efficiency of power transformation of charger device 110 and Vbat indicates the voltage level of battery 115. The charger device 110 can be arranged to control/make the adaptor 105 to increase the output power of adaptor 105 by controlling the adaptor 105 to adjust the output voltage and/or the output current (i.e. charger input voltage Vchrin and/or charger input current Ichrin). By doing so, the charger device 110 can control the adaptor 105 to operate at a maximum output power point as far as possible, and thus this can achieve the operation of fast charging and reduce the total waiting time period for charging the battery 115. Controlling the adaptor 105 to operate at the maximum output power point as far as possible can be regarded as an operation for tracking the maximum output power point. The charger device 110 equivalently is capable of performing maximum output power tracking operation upon the adaptor 105. In addition, by employing the charger device 110, the efficiency of charging system 100 can be improved.

Specifically, the adaptor 105 comprises a receiving circuit 1051 and a controlling circuit 1052, and the charger device 110 comprises a detection circuit 1101 and a controller 1102. The receiving circuit 1051 is arranged to receive a control signal transmitted from the charger device 110, and the controlling circuit 1052 is arranged to adjust its output current Ichrin and/or output voltage Vchrin according to the control signal sent by the charger device 110. In practice, the charger device 110 can control the adaptor 105 to output/maintain different levels of voltage Vchrin and current Ichrin. Since the charger device 110 can control the adaptor 105 to operate at the maximum output power point/level of the adaptor 105 as far as possible, the charger device 110 can control the adaptor 105 to output/keep the maximum output power. Even though the adaptor 105 may be implemented by using different adaptors, the charger device 110 can control the adaptor to operate at a maximum output power point of this adaptor as far as possible. For example, even if the adaptor 105 is implemented by using an adaptor merely capable of outputting lower output power, the charger device 110 can make this adaptor to operate at its maximum output power point so that this adaptor may be able to equivalently provide a charging current that is larger than a charging current corresponding to another adaptor capable of outputting higher output power. Thus, even the adaptor 105 may be different adaptors corresponding to different rated output currents, the charger device 110 is compatible with these different adaptors. Additionally, the adaptor 105 may be an AC-to-DC adaptor, an adaptor including standard USB host port(s), and a car adaptor, etc.. In addition, the communication between the adaptor 105 and charger device 110 can be wireless communication or wired communication. These modifications all fall within the scope of the present invention.

In practice, the detection circuit 1101 is arranged to sense/detect the output voltage of adaptor 105 (i.e. the input voltage Vchrin of charger device 110), the output current of adaptor 105 (i.e. the input current Ichrin of charger device 110), the charging current Ichg, and the battery voltage Vbat. According to the sensing result(s) of detection circuit 1101, the controller 1102 can control the adaptor 105 to make the adaptor 105 adjust its output current Ichrin and/or its output voltage Vchrin so that this can make the adaptor 105 automatically operate at its maximum output power point. The charging current Ichg can be effectively raised or increased.

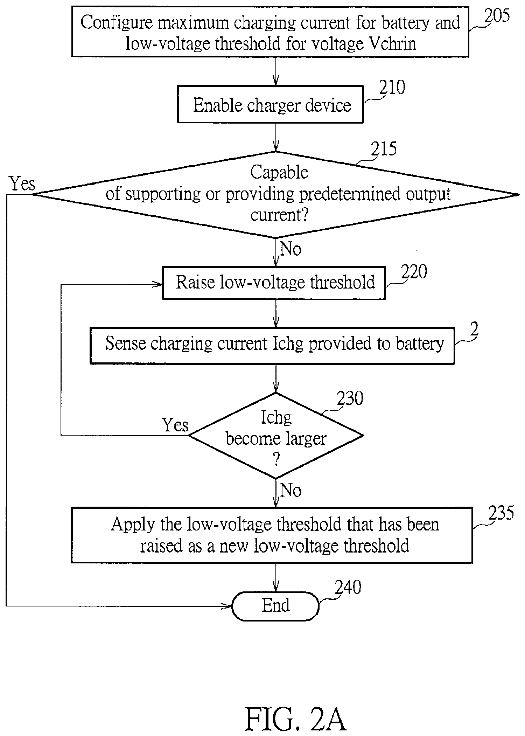

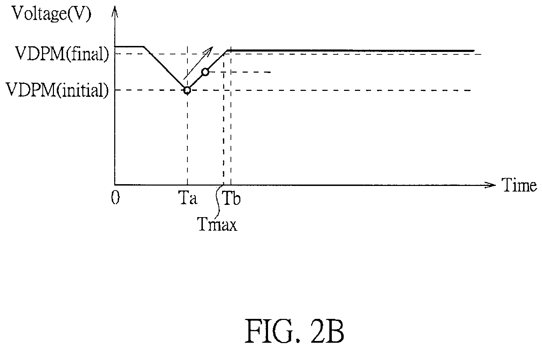

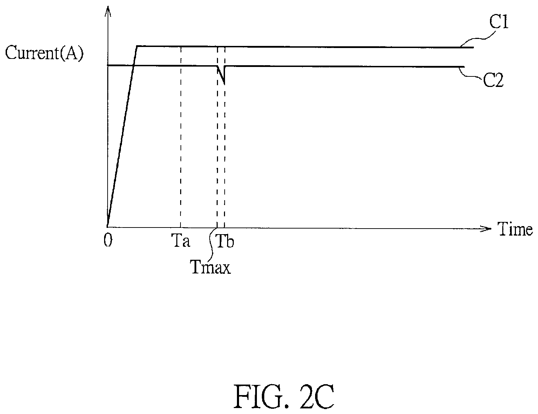

FIG. 2A is a flowchart illustrating the operations of charger device 110 according to a first embodiment of the present invention. FIG. 2B is a diagram illustrating an example of output voltage curve of adaptor 105 according to the flowchart of FIG. 2A. FIG. 2C is a diagram illustrating an example of current curve of adaptor 105 according to the flowchart of FIG. 2A and the output voltage curve of FIG. 2B. Please refer to FIG. 2B. As shown in FIG. 2B, before time Ta, the charger device 110 tries to control the adaptor 105 to provide/output the predetermined current level, and the output voltage Vchrin of adaptor 105 is gradually lowered until the output voltage Vchrin reaches an initial level (e.g. 4.5Volts) of low-voltage threshold VDPM at time Ta; in this example the adaptor 105 may be not capable of supporting/providing this predetermined current level. At time Ta, the controller 1102 is arranged to control the adaptor 105 to make the adaptor 105 raise its low-voltage threshold VDPM from the initial level to a higher level. For example, the initial level may be set as 4.5Volts. The controller 1102 can control the adaptor 105 to make the adaptor 105 gradually raise the low-voltage threshold VDPM from 4.5Volts to a higher level such as 4.6 Volts, 4.7Volts, or 4.8Volts, etc.. Once the low-voltage threshold VDPM is adjusted, this indicates that the minimum level of output voltage Vchrin of adaptor 105 is limited to an adjusted level of low-voltage threshold VDPM. Accordingly, by making the adaptor 105 gradually raise the low-voltage threshold VDPM, this can equivalently raise the output voltage Vchrin of adaptor 105. According to the equation of power transformation, when the output voltage Vchrin of adaptor 105 becomes higher, the charging current Ichg provided from the charger device 110 to the battery 115 becomes larger. The detection circuit 1101 is arranged to sense the charging current Ichg. If the sensed charging current Ichg becomes larger when the low-voltage threshold VDPM is gradually raised, then the controller 1102 continues controlling the adaptor 105 to raise the low-voltage threshold VDPM. If the sensed charging current Ichg does not become larger any more at time Tb when the adaptor 105 is trying to raise the low-voltage threshold VDPM, then the controller 1102 may control the adaptor 105 to maintain or keep the final level of low-voltage threshold VDPM (corresponding to time Tmax). The controller 1102 applies this final level of low-voltage threshold VDPM to the adaptor 105 so that the adaptor 105 maintains its output voltage at the final level.

As shown in FIGS. 2B and 2C, C1 of FIG. 2C represents the curve of input current of adaptor 105, and C2 of FIG. 2C represents the curve of actual charging current Ichg. The charging current Ichg does not become larger any more after Tmax; this indicates that the charging current Ichg corresponding to Tmax is a maximum charging current. In practice, if the controller 1102 continues to raise the low-voltage threshold until time Tb, then instead the charging current Ichg may become slightly smaller at time Tb as shown in FIG. 2C. Accordingly, for the adaptor 105, its maximum output power corresponds to the working point of time Tmax. The controller 1102 controls the adaptor 105 to maintain or keep the low-voltage threshold VDPM corresponding to time Tmax so that the output power Vchrin of adaptor 105 can be kept at the maximum level. This indicates that the low-voltage threshold VDPM is gradually increased from time Ta to time Tmax. For example, the maximum output power that can be actually provided by the adaptor 105 may be equal to 5 Watts. The final level of low-voltage threshold VDPM after being adjusted may be preferably equal to 4.8Volts (corresponding to the working point of time Tmax), and the output current of adaptor 105 may be raised from 1000mA to 1040mA. Accordingly, the output power of adaptor 105 is almost equal to 5 Watts which is the maximum output power higher than 4,5 Watts of adaptor 105 when its output voltage is kept at 4.5Volts (corresponding to the working point of time Ta) and its output current is kept at 1000mA. Thus, by doing so, the controller 1102 can effectively control the adaptor 105 so that the adaptor 105 operates at its maximum output power point as far as possible so as to output the maximum output power.

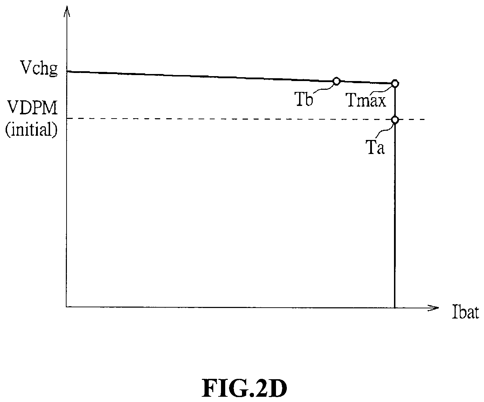

FIG. 2D is a diagram illustrating an example of I-V curve of adaptor 105 according to the embodiment shown in FIGS. 2A-2C. Values at the horizontal axis represents different levels of the output current provided by the adaptor 105, and values at the vertical axis represents different levels of output voltage provided by the adaptor 105. The working point of time Tmax indicates the maximum output power point of adaptor 105. The working point of time Ta indicates an output power point corresponds to its output voltage being kept at the initial level of low-voltage threshold VDPM. The working point of time Tb indicates another lower output power of adaptor 105. As shown in FIG. 2D, the controller 1102 controls the adaptor 105 to gradually increase its low-voltage threshold VDPM so that its working point can gradually approach the working point of time Tmax. In addition, even though the controller 1102 may make the adaptor 105 operate at the working point of time Tb when controlling the adaptor 105 to gradually increase its low-voltage threshold VDPM, the controller 1102 can immediately control the adaptor 105 to appropriately decrease the low-voltage threshold VDPM to make the adaptor 105 operate at the maximum output power point of time Tmax. As a result, the controller 1102 can control the adaptor 105 to make the adaptor 105 operate at the maximum output power point as far as possible.

Please refer to FIG. 2A. Provided that substantially the same result is achieved, the steps of the flowchart shown in FIG. 2A need not be in the exact order shown and need not be contiguous, that is, other steps can be intermediate. The operations of steps in FIG. 2A are detailed in the following:

Step 205: The controller 1102 (for example before time Ta of FIG. 2B) configures or sets the level of a maximum charging current for the battery 115 and also configures/sets the level of low-voltage threshold VDPM for the input voltage Vchrin of charger device 110; the input voltage Vchrin of charger device 110 substantially indicates the output voltage provided by the adaptor 105.

Step 210: The charger device 110 is enabled.

Step 215: The controller 1102 determines whether the adaptor 105 is not capable of supporting or providing a predetermined level of output current; the controller 1102 is arranged to detect whether its input voltage Vchrin (i.e. the output voltage of adaptor 105) becomes lower and reaches the low-voltage threshold VDPM to determine whether the adaptor 105 is not capable of providing/supporting the predetermined level of output current; if the input voltage Vchrin reaches the low-voltage threshold VDPM, this indicates that the adaptor 105 is not capable of supporting the predetermined level of output current, and the flow proceeds to Step 220. Instead, the flow proceeds to Step 240.

Step 220: The controller 1102 raises the low-voltage threshold VDPM for the adaptor 105.

Step 225: The detection circuit 1101 senses the charging current Ichg provided to the battery 115.

Step 230: The controller 1102 checks the sensed charging current Ichg. If the sensed charging current Ichg does not become larger (for example at time Tb of FIG. 2B), the flow proceeds to Step 235; otherwise, the flow proceeds to Step 220.

Step 235: The controller 1102 uses or applies the low-voltage threshold VDPM that has been raised as a new low-voltage threshold; the final level of low-voltage threshold VDPM corresponds to time Tmax; and

Step 240: End.

It should be noted that, in Step 205, the controller 1102 configures or sets the level of the maximum charging current for the battery 115, to avoid that the charging current Ichg exceeds above the maximum charging current. However, Step 205 and Step 210 can be optional. This is not meant to be a limitation of the present invention.

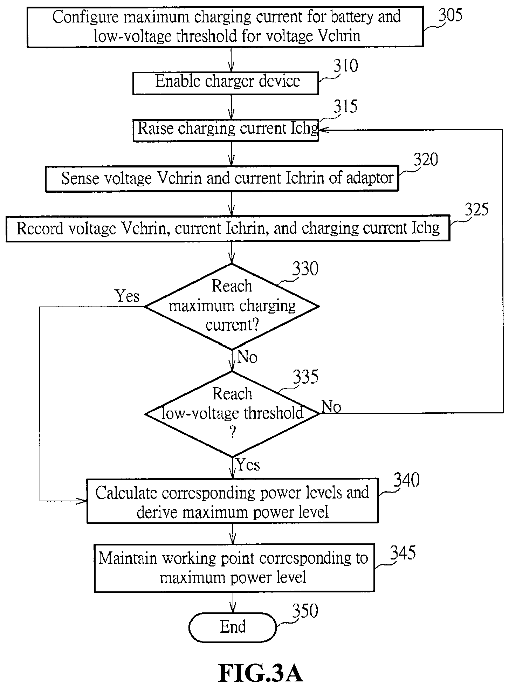

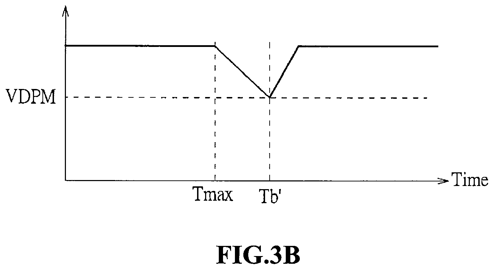

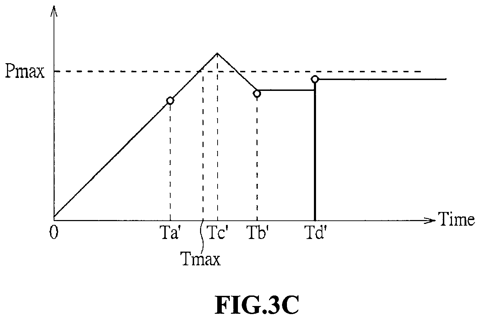

Additionally, the controller 1102 can control and make the adaptor 105 to operate its maximum output power point by calculating the actual output powers of adaptor 105 and selecting the maximum output power to obtain the preferred working point of time Tmax; Ta' - Td' shown in FG. 3C are other working points of different times. FIG. 3A is a flowchart illustrating the operations of charger device 110 according to a second embodiment of the present invention. FIG. 3B is a diagram illustrating an example of voltage curve of adaptor 105 according to the flowchart of FIG. 3A. FIG. 3C is a diagram illustrating an example of current curve of adaptor 105 according to the flowchart of FIG. 3A and the voltage curve of FIG. 3B. For example, the charger device 110 tries to control the adaptor 105 to provide/output a predetermined current level, and in this example the adaptor 105 is not capable of supporting/providing this predetermined current level. The controller 1102 controls the adaptor 105 to adjust the output voltage and current of adaptor 105 so as to gradually raise the charging current Ichg as far as possible. Each time when the output voltage and current are adjusted, the detection circuit 1101 senses the adjusted output voltage and current of adaptor 105. The controller 1102 records the sensed output voltage and current. Then, the controller 1102 determines whether the charging current Ichg reaches the maximum charging current or not and determines whether the output voltage of adaptor 105 reaches the low-voltage threshold VDPM or not. If the charging current Ichg does not yet reach the maximum charging current and the output voltage of adaptor 105 does not yet reach the low-voltage threshold VDPM, this may indicate that the charging current Ichg still can be increased. If the charging current Ichg reaches the maximum charging current or the output voltage of adaptor 105 reaches the low-voltage threshold VDPM, the controller 1102 is arranged to begin to calculate corresponding power levels according to the recorded output voltages and recorded output currents. The controller 1102 selects the maximum power level from the calculated power levels and applies the output current corresponding to the maximum power level as the current limit so as to control the adaptor 105 to operate at the working point of maximum power level. For example, the initial level may be set as 4.5Volts. The controller 1102 can control the adaptor 105 to adjust output voltage and output current for raising/increasing the charging current Ichg step by step, and can record the sensed output voltage and output current of adaptor 105. Accordingly, by calculation, the controller 1102 can derive or obtain the working point of maximum output power level and can control the adaptor 105 to operate at this working point.

Please refer to FIG. 3B and FIG. 3C. As shown in FIG. 3B, before time Tmax, the voltage does not become lower. The charger device 110 is arranged to control the adaptor 105 to output larger current as far as possible. The current level as shown in FIG. 3C becomes higher with time. From Tmax to Tc', the current level becomes higher, and the voltage level is degraded. From Tc' to Tb', both the current level and voltage level are degraded. The controller 1102 can calculate output power levels corresponding to different current levels and voltage levels respectively. In this example, after calculation, the controller 1102 decides that the working point of time Tmax corresponds to the maximum output power level Pmax, and the controller 1102 is arranged to make the adaptor 105 to maintain/keep the current level and voltage level corresponding to time Tmax after time Td'. By doing this, the controller 1102 can control the adaptor 105 to operate at the working point of maximum output power level.

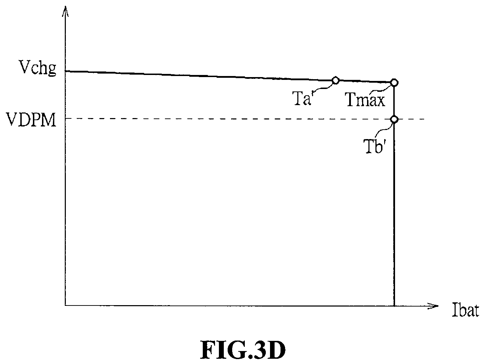

Please refer to FIG. 3D. FIG. 3D is a diagram illustrating an example of I-V curve of adaptor 105 according to the embodiment shown in FIGS. 3A-3C. Values at the horizontal axis represents different levels of the output current provided by the adaptor 105, and values at the vertical axis represents different levels of output voltage provided by the adaptor 105. The working point of time Tmax indicates the maximum output power point of adaptor 105. The working points of times Ta' and Tb' respectively represent output power points corresponding to lower output power levels. As shown in FIG. 3D, the controller 1102 can control the adaptor 105 to gradually increase/raise the output current so that the working point of adaptor 105 can gradually approach the working point of time Tmax. Even though the controller 1102 may make the adaptor 105 operate at the working point of time Tb' when controlling the adaptor 105 to overly decrease the output voltage to cause the output power level become lower, the controller 1102 can immediately control the adaptor 105 to make the adaptor 105 operate at the maximum output power point of time Tmax. As a result, the controller 1102 can control the adaptor 105 to make the adaptor 105 operate at the maximum output power point as far as possible.

Provided that substantially the same result is achieved, the steps of the flowchart shown in FIG. 3A need not be in the exact order shown and need not be contiguous, that is, other steps can be intermediate. The operations of steps in FIG. 3A are detailed in the following:

Step 305: The controller 1102 (for example before time Tb') configures or sets the level of the maximum charging current for the battery 115 and also configures/sets the level of low-voltage threshold VDPM for an input voltage of the charger device 110; the input voltage of charger device 110 indicates an output voltage provided by the adaptor 105.

Step 310: The charger device 110 is enabled.

Step 315: The controller 1102 controls the adaptor 105 to adjust output voltage and current of adaptor 105 so as to raise the charging current Ichg for the battery 115.

Step 320: The detection circuit 1101 senses the output voltage Vchrin and current Ichrin of adaptor 105.

Step 325: The controller 1102 records the sensed output voltage Vchrin and current Ichrin of adaptor 105 and the charging current Ichg.

Step 330: The controller 1102 determines whether the charging current Ichg reaches the level of maximum charging current or not. If so, the flow proceeds to Step 340; otherwise, the flow proceeds to Step 335.

Step 335: The controller 1102 determines whether the output voltage of adaptor 105 (i.e. Vchrin) reaches the low-voltage threshold VDPM or not. If so, the flow proceeds to Step 340; otherwise, the flow proceeds to Step 315.

Step 340: The controller 1102 calculates corresponding power levels according to the recorded output voltages and output currents, and derives a maximum power level from the calculated power levels.

Step 345: The controller 1102 applies the recorded output current corresponding to the maximum power level as a current limit for the output current of adaptor 105, and controls the adaptor 105 to maintains or keeps at the working point corresponding to the maximum power level according to the current limit; and

Step 350: End.

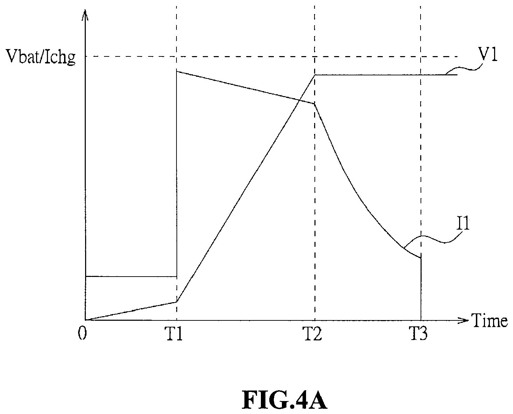

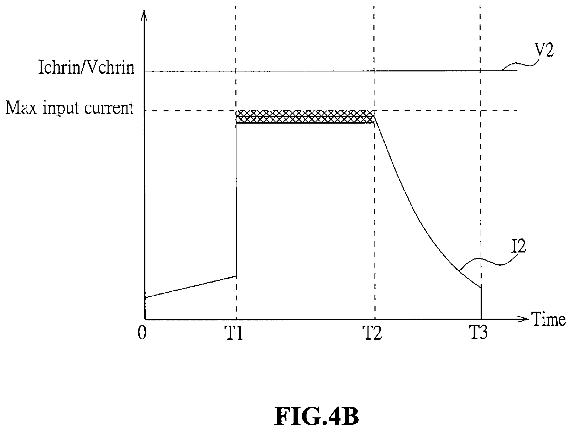

FIG. 4A and FIG. 4B are diagrams respectively illustrating an example of I-V curve of battery 115 and an example of I-V curve of adaptor 105. As shown in FIGS. 4A and 4B, by adjusting the low-voltage threshold VDPM and/or adjusting the output current of adaptor 105, the adaptor 105 can operate at the maximum output power point, and the output current of adaptor 105 (i.e. the input current Ichrin of charger device 110) can be adjusted to approach to the maximum output current that actually can be provided/supplied by the adaptor 105 when the adaptor 105 operates under a constant current mode from time T1 to time T2. Curve VI represents the level of battery voltage VBAT, and curve 11 represents the level of charging current Ichg. Curve V2 represents the output voltage Vchrin of adaptor 105, and curve 12 represents the output current Ichrin of adaptor 105.

According to the embodiments, the charger device 110 can control the adaptor 105 to make the adaptor 105 operate at the working point of maximum output power level when the adaptor 105 is not capable of providing/supporting a predetermined current for the battery 115. For example, the charger device 110 may be designed to provide a charging current of 1.5A for the battery 115. The adaptor 105 may be merely capable of providing a charging current of 1A. In this situation, the charger device 110 can make the adaptor 105 operate at the working point of maximum output power level so that the purpose of fast charging can be achieved. In addition, if the adaptor 105 is capable of providing a charging current of 1.8A higher than 1.5A, then the charger device 110 can also make the adaptor 105 operate at the working point of maximum output power level. In another embodiment, the charger device 110 may not make the adaptor 105 operate at the working point of maximum output power level if the adaptor 105 is capable of providing the predetermined charging current; this is not intended to be a limitation of the present invention. Consequently, the charger device 110 is suitable for all types of adaptors.

In addition, although the charger device 110 may be implemented by using a switching mode charger, however, the charger device 110 can be implemented by different types of chargers. This is not meant to be a limitation of the present invention.

## Claims

1.  A method for controlling an adaptor (105) to charge a battery (115), comprising:

    determining whether the adaptor (105) is capable of providing a predetermined charging current for the battery (115);
    sensing an output voltage (Vchrin) of the adaptor (105) and an output current (Ichrin) of the adaptor (105); and
    adjusting the output current (Ichrin) and the output voltage (Vchrin) according to the sensed output voltage (Vchrin) and the sensed output current (Ichrin) when the adaptor (105) is not capable of providing the predetermined charging current,

    **characterized in that** the step of adjusting the output current (Ichrin) and the output voltage (Vchrin) comprises:

    raising a low-voltage threshold for the output voltage (Vchrin) of the adaptor (105) to raise the output voltage (Vchrin) and correspondingly adjust the output current (Ichrin), wherein the low-voltage threshold is maintained when the adjusted output current (Ichrin) does not become larger;
    wherein the low-voltage threshold is a minimum voltage limit for the output voltage (Vchrin) of the adaptor (105).

2.  The method of claim 1, wherein the step of adjusting the output current (Ichrin) and the output voltage (Vchrin) comprises:

    raising the output current (Ichrin) of the adaptor (105) for the battery (115);
    sensing the output current (Ichrin) and the output voltage (Vchrin);
    calculating power levels according to the sensed output current (Ichrin) and the sensed output voltage (Vchrin);
    deriving a maximum power level from the power levels; and
    maintaining the output voltage (Vchrin) at a voltage level and the output current (Ichrin) at a current level wherein the voltage level and the current level corresponding to the maximum power level.

3. The method of claim 2, wherein the step of adjusting the output current (Ichrin) and the output voltage (Vchrin) further comprises:

detecting whether the charging current reaches a maximum charging current and whether the output voltage (Vchrin) reaches a low-voltage threshold; and
stopping raising the output current (Ichrin) of the adaptor (105) if the charging current reaches the maximum charging current or the output voltage (Vchrin) reaches the low-voltage threshold.

4. The method of claim 1, wherein the step of determining whether the adaptor (105) is capable of providing the predetermined charging current for the battery (115) comprises:

comparing the output voltage (Vchrin) with a low-voltage threshold to determine whether the adaptor (105) is capable of equivalently providing the predetermined charging current; and
wherein the adaptor (105) is not capable of providing the predetermined charging current if the output voltage (Vchrin) reaches the low-voltage threshold.

5. A charger device for controlling an adaptor (105) to charge a battery (115), comprising:

a detection circuit (1101), for sensing an output voltage (Vchrin) of the adaptor (105) and an output current (Ichrin) of the adaptor (105); and
a controller (1102), coupled to the detection circuit, for determining whether the adaptor (105) is capable of providing a predetermined charging current for the battery (115), and adjusting the output current (Ichrin) and the output voltage (Vchrin) according to the sensed output voltage (Vchrin) and the sensed output current (Ichrin) when the adaptor (105) is not capable of providing the predetermined charging current,

**characterized in that**
the controller (1102) is arranged to raise a low-voltage threshold for the output voltage (Vchrin) of the adaptor (105) to raise the output voltage (Vchrin) and correspondingly adjust the output current, wherein the low-voltage threshold is maintained when the adjusted output current (Ichrin) does not become larger; and
the low-voltage threshold is a minimum voltage limit for the output voltage (Vchrin) of the adaptor (105).

6. The charger device of claim 5, wherein the controller (1102) is used for: raising the output current (Ichrin) of the adaptor (105) for the battery (115); sensing the output current (Ichrin) and the output voltage (Vchrin); calculating power levels according to the sensed output current (Ichrin) and the sensed output voltage (Vchrin); deriving a maximum power level from the power levels; and maintaining the output voltage (Vchrin) at a voltage level and the output current (Ichrin) at a current level wherein the voltage level and the current level corresponding to the maximum power level.

7. The charger device of claim 6, wherein the detection circuit (1101) detects whether the charging current reaches a maximum charging current and whether the output voltage (Vchrin) reaches a low-voltage threshold; and the controller (1102) stops raising the output current (Ichrin) of the adaptor (105) if the charging current reaches the maximum charging current or the output voltage (Vchrin) reaches the low-voltage threshold.

8. The charger device of claim 5, wherein the controller (1102) is arranged to compare the output voltage (Vchrin) with a low-voltage threshold to determine whether the adaptor (105) is capable of providing the predetermined charging current, the low-voltage threshold being a minimum voltage limit for the output voltage (Vchrin) of the adaptor (105); and, the adaptor (105) is not capable of providing the predetermined charging current if the output voltage (Vchrin) reaches the low-voltage threshold.

9. A controllable adaptor (105) for charging a battery (115), comprising:

a receiving circuit, for receiving a control signal from a charger; and
a controlling circuit, coupled to the receiving circuit, for adjusting an output current (Ichrin) and an output voltage (Vchrin) of the controllable adaptor (105) according to the control signal of the charger when the adaptor (105) is not capable of providing a predetermined charging current for the battery (115),
**characterized in that**
a low-voltage threshold for the output voltage (Vchrin) of the adaptor (105) is raised to raise the output voltage (Vchrin) and correspondingly adjust the output current, wherein the low-voltage threshold is maintained when the adjusted output current (Ichrin) does not become larger; and
the low-voltage threshold is a minimum voltage limit for the output voltage (Vchrin) of the adaptor (105).

**10.** The controllable adaptor (105) of claim 9, wherein the controlling circuit raises the output current (Ichrin) of the adaptor (105) for the battery (115), and stops raising the output current (Ichrin) of the adaptor (105) if the charging current reaches a maximum charging current or the output voltage (Vchrin) reaches the low-voltage threshold.

**11.** The method of claim 1, wherein the adaptor (105) or the controllable adaptor (105) operates at a maximum output power point.

**12.** The charger device of claim 5, wherein the charger is configured to control the adaptor (105) to operate at a maximum output power point.

**13.** The controllable adaptor (105) of claim 9, wherein the adaptor (105) is configured to be controlled by the charger to operate at a maximum output power point.

**Patentansprüche**

**1.** Verfahren zum Steuern eines Adapters (105) zum Laden einer Batterie (115), umfassend:

Ermitteln, ob der Adapter (105) imstande ist, einen vorgegebenen Ladestrom für die Batterie (115) bereitzustellen;
Erfassen einer Ausgangsspannung (Vchrin) des Adapters (105) und eines Ausgangsstroms (Ichrin) des Adapters (105); und
Einstellen des Ausgangsstroms (Ichrin) und der Ausgangsspannung (Vchrin) gemäß der erfassten Ausgangsspannung (Vchrin) und dem erfassten Ausgangsstrom (Ichrin), wenn der Adapter (105) nicht imstande ist, den vorgegebenen Ladestrom bereitzustellen,

dadurch gekennzeichnet, dass der Schritt des Einstellens des Ausgangsstroms (Ichrin) und der Ausgangsspannung (Vchrin) umfasst:

Erhöhen eines Niederspannungsschwellenwerts für die Ausgangsspannung (Vchrin) des Adapters (105), um die Ausgangsspannung (Vchrin) zu erhöhen und den Ausgangsstrom (Ichrin) entsprechend einzustellen, wobei der Niederspannungsschwellenwert beibehalten wird, wenn der eingestellte Ausgangsstrom (Ichrin) nicht größer wird;
wobei der Niederspannungsschwellenwert eine Mindestspannungsgrenze für die Ausgangsspannung (Vchrin) des Adapters (105) ist.

**2.** Verfahren nach Anspruch 1, wobei der Schritt des Einstellens des Ausgangsstroms (Ichrin) und der Ausgangsspannung (Vchrin) umfasst:

Erhöhen des Ausgangsstroms (Ichrin) des Adapters (105) für die Batterie (115);
Erfassen des Ausgangsstroms (Ichrin) und der Ausgangsspannung (Vchrin);
Berechnen von Leistungspegeln gemäß dem erfassten Ausgangsstrom (Ichrin) und der erfassten Ausgangsspannung (Vchrin);
Ableiten eines maximalen Leistungspegels aus den Leistungspegeln; und
Beibehalten der Ausgangsspannung (Vchrin) auf einem Spannungspegel und des Ausgangsstroms (Ichrin) auf einem Strompegel, wobei der Spannungspegel und der Strompegel dem maximalen Leistungspegel entsprechen.

**3.** Verfahren nach Anspruch 2, wobei der Schritt des Einstellens des Ausgangsstroms (Ichrin) und der Ausgangsspannung (Vchrin) ferner umfasst:

Detektieren, ob der Ladestrom einen maximalen Ladestrom erreicht und
ob die Ausgangsspannung (Vchrin) einen Niederspannungsschwellenwert erreicht; und
Stoppen des Erhöhens des Ausgangsstroms (Ichrin) des Adapters (105), wenn der Ladestrom den maximalen Ladestrom erreicht oder die Ausgangsspannung (Vchrin) den Niederspannungsschwellenwert erreicht.

**4.** Verfahren nach Anspruch 1, wobei der Schritt des Ermittelns, ob der Adapter (105) imstande ist, den vorgegebenen Ladestrom für die Batterie (115) bereitzustellen, umfasst:

Vergleichen der Ausgangsspannung (Vchrin) mit einem Niederspannungsschwellenwert, um zu ermitteln, ob der Adapter (105) imstande ist, den vorgegebenen Ladestrom äquivalent bereitzustellen; und
wobei der Adapter (105) nicht imstande ist, den vorgegebenen Ladestrom bereitzustellen, wenn die Ausgangsspannung (Vchrin) den Niederspannungsschwellenwert erreicht.

**5.** Ladevorrichtung zum Steuern eines Adapters (105) zum Laden einer Batterie (115), umfassend:

eine Erfassungsschaltung (1101) zum Erfassen einer Ausgangsspannung (Vchrin) des Adapters (105) und eines Ausgangsstroms (Ichrin) des Adapters (105); und
eine Steuereinheit (1102), die mit der Erfassungsschaltung gekoppelt ist, zum Ermitteln, ob der Adapter (105) imstande ist, einen vorgegebenen Ladestrom für die Batterie (115) bereitzustellen, und zum Einstellen des Ausgangsstroms (Ichrin) und der Ausgangsspannung (Vchrin) gemäß der erfassten Ausgangsspannung (Vchrin) und dem erfassten Ausgangsstrom (Ichrin), wenn der Adapter (105) nicht imstande ist, den vorgegebenen Ladestrom bereitzustellen, **dadurch gekennzeichnet, dass** die Steuereinheit (1102) zum Erhöhen eines Niederspannungsschwellenwerts für die Ausgangsspannung (Vchrin) des Adapters (105) eingerichtet ist, um die Ausgangsspannung (Vchrin) zu erhöhen und den Ausgangsstrom entsprechend einzustellen, wobei der Niederspannungsschwellenwert beibehalten wird, wenn der eingestellte Ausgangsstrom (Ichrin) nicht größer wird; und der Niederspannungsschwellenwert eine Mindestspannungsgrenze für die Ausgangsspannung (Vchrin) des Adapters (105) ist.

6. Ladevorrichtung nach Anspruch 5, wobei die Steuereinheit (1102) verwendet wird, zum: Erhöhen des Ausgangsstroms (Ichrin) des Adapters (105) für die Batterie (115); Erfassen des Ausgangsstroms (Ichrin) und der Ausgangsspannung (Vchrin); Berechnen von Leistungspegeln gemäß dem erfassten Ausgangsstrom (Ichrin) und der erfassten Ausgangsspannung (Vchrin); Ableiten eines maximalen Leistungspegels aus den Leistungspegeln; und Beibehalten der Ausgangsspannung (Vchrin) auf einem Spannungspegel und des Ausgangsstroms (Ichrin) auf einem Strompegel, wobei der Spannungspegel und der Strompegel dem maximalen Leistungspegel entsprechen.

7. Ladevorrichtung nach Anspruch 6, wobei die Erfassungsschaltung (1101) erfasst, ob der Ladestrom einen maximalen Ladestrom erreicht und ob die Ausgangsspannung (Vchrin) einen Niederspannungsschwellenwert erreicht; und die Steuereinheit (1102) das Erhöhen des Ausgangsstroms (Ichrin) des Adapters (105) stoppt, wenn der Ladestrom den maximalen Ladestrom erreicht oder die Ausgangsspannung (Vchrin) den Niederspannungsschwellenwert erreicht.

8. Ladevorrichtung nach Anspruch 5, wobei die Steuereinheit (1102) zum Vergleichen der Ausgangsspannung (Vchrin) mit einem Niederspannungsschwellenwert eingerichtet ist, um zu ermitteln, ob der Adapter (105) imstande ist, den vorgegebenen Ladestrom bereitzustellen, wobei der Niederspannungsschwellenwert eine Mindestspannungsgrenze für die Ausgangsspannung (Vchrin) des Adapters (105) ist; und der Adapter (105) nicht imstande ist, den vorgegebenen Ladestrom bereitzustellen, wenn die Ausgangsspannung (Vchrin) den Niederspannungsschwellenwert erreicht.

9. Steuerbarer Adapter (105) zum Laden einer Batterie (115), umfassend:

eine Empfangsschaltung zum Empfangen eines Steuersignals von einem Ladegerät; und eine Steuerschaltung, die mit der Empfangsschaltung gekoppelt ist, um einen Ausgangsstrom (Ichrin) und eine Ausgangsspannung (Vchrin) des steuerbaren Adapters (105) gemäß dem Steuersignal des Ladegeräts einzustellen, wenn der Adapter (105) nicht imstande ist, einen vorgegebenen Ladestrom für die Batterie (115) bereitzustellen, **dadurch gekennzeichnet, dass** ein Niederspannungsschwellenwert für die Ausgangsspannung (Vchrin) des Adapters (105) erhöht wird, um die Ausgangsspannung (Vchrin) zu erhöhen und den Ausgangsstrom entsprechend einzustellen, wobei der Niederspannungsschwellenwert beibehalten wird, wenn der eingestellte Ausgangsstrom (Ichrin) nicht größer wird; und der Niederspannungsschwellenwert eine Mindestspannungsgrenze für die Ausgangsspannung (Vchrin) des Adapters (105) ist.

10. Steuerbarer Adapter (105) nach Anspruch 9, wobei die Steuerschaltung den Ausgangsstrom (Ichrin) des Adapters (105) für die Batterie (115) erhöht und das Erhöhen des Ausgangsstroms (Ichrin) des Adapters (105) stoppt, wenn der Ladestrom einen maximalen Ladestrom erreicht oder die Ausgangsspannung (Vchrin) den Niederspannungsschwellenwert erreicht.

11. Verfahren nach Anspruch 1, wobei der Adapter (105) oder der steuerbare Adapter (105) an einem maximalen Ausgangsleistungspunkt arbeitet.

12. Ladevorrichtung nach Anspruch 5, wobei die Ladevorrichtung konfiguriert ist, den Adapter (105) zu steuern, um an einem maximalen Ausgangsleistungspunkt zu arbeiten.

13. Steuerbarer Adapter (105) nach Anspruch 9, wobei der Adapter (105) konfiguriert ist, durch das Ladegerät gesteuert zu werden, um an einem maximalen Ausgangsleistungspunkt zu arbeiten.

## Revendications

1. Procédé pour commander un adaptateur (105) afin de charger une batterie (115), comprenant le fait :

de déterminer si l'adaptateur (105) est capable de fournir un courant de charge prédéterminé pour la batterie (115) ;

de détecter une tension de sortie (Vchrin) de l'adaptateur (105) et un courant de sortie (Ichrin) de l'adaptateur (105) ; et

d'ajuster le courant de sortie (Ichrin) et la tension de sortie (Vchrin) en fonction de la tension de sortie détectée (Vchrin) et du courant de sortie détecté (Ichrin) lorsque l'adaptateur (105) n'est pas capable de fournir le courant de charge prédéterminé,

**caractérisé en ce que** l'étape d'ajustement du courant de sortie (Ichrin) et de la tension de sortie (Vchrin) comprend le fait :

d'élever un seuil de basse tension pour la tension de sortie (Vchrin) de l'adaptateur (105) pour élever la tension de sortie (Vchrin) et pour ajuster de manière correspondante le courant de sortie (Ichrin), où le seuil de basse tension est maintenu lorsque le courant de sortie ajusté (Ichrin) n'augmente pas;

dans lequel le seuil de basse tension est une limite de tension minimale pour la tension de sortie (Vchrin) de l'adaptateur (105).

2. Procédé de la revendication 1, dans lequel l'étape d'ajustement du courant de sortie (Ichrin) et de la tension de sortie (Vchrin) comprend le fait :

d'élever le courant de sortie (Ichrin) de l'adaptateur (105) pour la batterie (115) ;

de détecter le courant de sortie (Ichrin) et la tension de sortie (Vchrin) ;

de calculer des niveaux de puissance en fonction du courant de sortie détecté (Ichrin) et de la tension de sortie détectée (Vchrin) ;

de dériver un niveau de puissance maximale des niveaux de puissance ; et

de maintenir la tension de sortie (Vchrin) à un niveau de tension et le courant de sortie (Ichrin) à un niveau de courant où le niveau de tension et le niveau de courant correspondent au niveau de puissance maximale.

3. Procédé de la revendication 2, dans lequel l'étape d'ajustement du courant de sortie (Ichrin) et de la tension de sortie (Vchrin) comprend en outre le fait :

de détecter si le courant de charge atteint un courant de charge maximal et si la tension de sortie (Vchrin) atteint un seuil de basse tension ; et

de cesser d'élever le courant de sortie (Ichrin) de l'adaptateur (105) si le courant de charge atteint le courant de charge maximal ou si la tension de sortie (Vchrin) atteint le seuil de basse tension.

4. Procédé de la revendication 1, dans lequel l'étape consistant à déterminer si l'adaptateur (105) est capable de fournir le courant de charge prédéterminé pour la batterie (115) comprend le fait :

de comparer la tension de sortie (Vchrin) à un seuil de basse tension pour déterminer si l'adaptateur (105) est capable de fournir de manière équivalente le courant de charge prédéterminé ; et

dans lequel l'adaptateur (105) n'est pas capable de fournir le courant de charge prédéterminé si la tension de sortie (Vchrin) atteint le seuil de basse tension.

5. Dispositif chargeur pour commander un adaptateur (105) afin de charger une batterie (115), comprenant :

un circuit de détection (1101), pour détecter une tension de sortie (Vchrin) de l'adaptateur (105) et un courant de sortie (Ichrin) de l'adaptateur (105) ; et

un dispositif de commande (1102), couplé au circuit de détection, pour déterminer si l'adaptateur (105) est capable de fournir un courant de charge prédéterminé pour la batterie (115), et ajuster le courant de sortie (Ichrin) et la tension de sortie (Vchrin) en fonction de la tension de sortie détectée (Vchrin) et du courant de sortie détecté (Ichrin) lorsque l'adaptateur (105) n'est pas capable de fournir le courant de charge prédéterminé,

**caractérisé en ce que**

le dispositif de commande (1102) est agencé pour élever un seuil de basse tension pour la tension de sortie (Vchrin) de l'adaptateur (105) afin d'élever la tension de sortie (Vchrin) et d'ajuster de manière correspondante le courant de sortie, où le seuil de basse tension est maintenu lorsque le courant de sortie ajusté (Ichrin) n'augmente pas ; et

le seuil de basse tension est une limite de tension minimale pour la tension de sortie (Vchrin) de l'adaptateur (105).

6. Dispositif chargeur de la revendication 5, dans lequel le dispositif de commande (1102) est utilisé : pour élever le courant de sortie (Ichrin) de l'adaptateur (105) pour la batterie (115) ; pour détecter le courant de sortie (Ichrin) et la tension de sortie (Vchrin) ; pour calculer des niveaux de puissance en fonction du courant de sortie détecté (Ichrin) et de la tension de sortie détectée (Vchrin) ; pour dériver un niveau de puissance maximale des niveaux de puissance ; et pour maintenir la tension de sortie (Vchrin) à un niveau de tension et le courant de sortie (Ichrin) à un niveau de courant où le niveau de tension et le niveau de courant correspondent au niveau de puissance maximale.

7. Dispositif chargeur de la revendication 6, dans lequel le circuit de détection (1101) détecte si le courant de charge atteint un courant de charge maximal et si la tension de sortie (Vchrin) atteint un seuil de basse tension ; et le dispositif de commande (1102) cesse d'élever le courant de sortie (Ichrin) de l'adaptateur (105) si le courant de charge atteint le courant de charge maximal ou si la tension de sortie (Vchrin) atteint le seuil de basse tension.

8. Dispositif chargeur de la revendication 5, dans lequel le dispositif de commande (1102) est agencé pour comparer la tension de sortie (Vchrin) à un seuil de basse tension afin de déterminer si l'adaptateur (105) est capable de fournir le courant de charge prédéterminé, le seuil de basse tension étant une limite de tension minimale pour la tension de sortie (Vchrin) de l'adaptateur (105) ; et l'adaptateur (105) n'est pas capable de fournir le courant de charge prédéterminé si la tension de sortie (Vchrin) atteint le seuil de basse tension.

9. Adaptateur pouvant être commandé (105) pour charger une batterie (115), comprenant :

un circuit de réception, pour recevoir un signal de commande à partir d'un chargeur ; et
un circuit de commande, couplé au circuit de réception, pour ajuster un courant de sortie (Ichrin) et une tension de sortie (Vchrin) de l'adaptateur pouvant être commandé (105) en fonction du signal de commande du chargeur lorsque l'adaptateur (105) n'est pas capable de fournir un courant de charge prédéterminé pour la batterie (115),
**caractérisé en ce que**
un seuil de basse tension pour la tension de sortie (Vchrin) de l'adaptateur (105) est élevé pour élever la tension de sortie (Vchrin) et pour ajuster de manière correspondante le courant de sortie, où le seuil de basse tension est maintenu lorsque le courant de sortie ajusté (Ichrin) n'augmente pas ; et
le seuil de basse tension est une limite de tension minimale pour la tension de sortie (Vchrin) de l'adaptateur (105).

10. Adaptateur pouvant être commandé (105) de la revendication 9, dans lequel le circuit de commande élève le courant de sortie (Ichrin) de l'adaptateur (105) pour la batterie (115), et cesse d'élever le courant de sortie (Ichrin) de l'adaptateur (105) si le courant de charge atteint un courant de charge maximal ou si la tension de sortie (Vchrin) atteint le seuil de basse tension.

11. Procédé de la revendication 1, dans lequel l'adaptateur (105) ou l'adaptateur pouvant être commandé (105) fonctionne à un point de puissance de sortie maximale.

12. Dispositif chargeur de la revendication 5, dans lequel le chargeur est configuré pour commander l'adaptateur (105) afin de fonctionner à un point de puissance de sortie maximale.

13. Adaptateur pouvant être commandé (105) de la revendication 9, dans lequel l'adaptateur (105) est configuré pour être commandé par le chargeur afin de fonctionner à un point de puissance de sortie maximale.

FIG. 1

EP 3 022 826 B1

Configure maximum charging current for battery and low-voltage threshold for voltage Vchrin — 205

Enable charger device — 210

215
Capable of supporting or providing predetermined output current?

Yes

No

Raise low-voltage threshold — 220

Sense charging current Ichg provided to battery — 2

230
Ichg become larger ?

Yes

No

Apply the low-voltage threshold that has been raised as a new low-voltage threshold — 235

End — 240

FIG. 2A

FIG. 2B

FIG. 2C

**FIG.2D**

Configure maximum charging current for battery and low-voltage threshold for voltage Vchrin    305

Enable charger device    310

Raise charging current Ichg    315

Sense voltage Vchrin and current Ichrin of adaptor    320

Record voltage Vchrin, current Ichrin, and charging current Ichg    325

Reach maximum charging current?    330

Yes

No

Reach low-voltage threshold ?    335

No

Yes

Calculate corresponding power levels and derive maximum power level    340

Maintain working point corresponding to maximum power level    345

End    350

**FIG.3A**

**FIG.3B**

**FIG.3C**

**FIG.3D**

**FIG.4A**

**FIG.4B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090001937 A1
- US 20100277131 A1
- US 2011199040 A1
- WO 2012132459 A1
- US 2012268063 A1
- WO 2011109746 A2
- US 8350522 B2